# EUROPEAN PATENT APPLICATION

(11) **EP 4 610 061 A1**
(43) Date of publication of application: **03.09.2025**
(21) Application number: 25159324.0
(22) Date of filing: 21.02.2025
(51) Int. Cl.: B60C 9/00, D02G 3/48, B60C 9/20, B60C 9/22

(54) **HYBRID CORD REINFORCEMENT FOR A TIRE**

(30) Priority: 01.03.2024 US 202418592979
(71) Applicant: The Goodyear Tire & Rubber Company, Akron, OH 44316 (US)
(72) Inventor: NAVARRO FERNANDEZ, Diego Alejandro, Cleveland, Ohio, 44113 (US); CELIK, Ceyhan, Stow, 44224 (US)
(74) Representative: Kutsch, Bernd

(57) **Abstract**

A cord reinforcement for a tire (1) is disclosed. The cord reinforcement comprises parallel cords (30) wherein at least one of the cords (30) is a hybrid cord comprising a flat monofilament (31) and a multifilament yarn (32). The flat monofilament (31) comprises polyamide and the multifilament yarn is wrapped around the flat monofilament (31) and comprises one or more of aramid, glass fiber material and carbon fiber material. The flat monofilament (31) has a linear density within a range of from 2200 dtex to 6000 dtex and the multifilament yarn (32) has a linear density within a range of from 1800 dtex to 4400 dtex. Also disclosed is a tire (1) comprising such a cord (30).

## Description

### Field of the Invention

The present invention is directed to a cord reinforcement for a tire, wherein the cord reinforcement comprises hybrid cords. Furthermore, the invention is directed to a tire comprising one or more of such hybrid cords.

### Background of the Invention

Multiple rubber components of tires comprise cord reinforcements. Such cord reinforced rubber components help to provide robust and comfortable tires. Furthermore, in some applications, such as in truck and off-the-road tire applications, there is a specific demand for durable and/or cut resistant tire constructions. While developments have been made in this field over the past years, significant room for improvement remains.

### Summary of the Invention

The invention relates to a cord reinforcement in accordance with claim 1 and to a tire in accordance with claim 11 or 12, respectively.

Dependent claims refer to preferred embodiments of the invention.

In a first preferred aspect, the present invention is directed to a cord reinforcement for a tire, comprising parallel cords wherein at least one of the cords is a hybrid cord comprising a flat monofilament and a multifilament yarn, wherein the flat monofilament comprises polyamide and the multifilament yarn is i) wrapped around the flat monofilament and ii) comprises one or more of aramid, glass fiber material and carbon fiber material. The flat monofilament has a linear density within a range of 2200 dtex to 6000 dtex and the multifilament yarn has a linear density within a range of 1800 dtex to 4400 dtex.

In a second preferred aspect, the present invention is directed to a tire comprising at least one rubber component reinforced by at least one hybrid cord comprising a flat monofilament and a multifilament yarn, wherein the flat monofilament comprises polyamide and the multifilament yarn is wrapped around the flat monofilament and comprises one or more of aramid, glass fiber material and carbon fiber material. The flat monofilament has a linear density within a range of 2200 dtex to 6000 dtex and the multifilament yarn has a linear density within a range of 1800 dtex to 4400 dtex.

### Brief Description of the Drawings

The invention will be described by way of example and with reference to the accompanying drawings in which:
FIG. 1 is a schematic cross-section of a pneumatic tire comprising a carcass ply reinforced by hybrid cords in accordance with an embodiment of the present invention;
FIG. 2 is a schematic partial cross section of a carcass ply reinforced by parallel hybrid cords in accordance with an embodiment of the present invention;
FIG. 3 is a schematic cross section of a hybrid cord, such as already shown in Figure 2; and
FIG. 4 is a schematic partial perspective view of a fabric comprising multiple hybrid cords, such as those shown in Figures 2 and 3, also in accordance with an embodiment of the present invention.

### Detailed Description of Preferred Embodiments of the Invention

According to the first preferred aspect, the cord reinforcement for a tire comprises parallel cords wherein at least one of the cords is a hybrid cord comprising a flat monofilament and a multifilament yarn, wherein the flat monofilament comprises polyamide and the multifilament yarn is i) wrapped around the flat monofilament and ii) comprises one or more of aramid, glass fiber material and carbon fiber material. The flat monofilament has a linear density within a range of 2200 dtex to 6000 dtex and the multifilament yarn has a linear density within a range of 1800 dtex to 4400 dtex.

In one preferred embodiment, the multifilament yarn is helically wrapped around the flat monofilament. In particular, the multifilament yarn is not twisted together with the flat monofilament. In other words, the monofilament can optionally be described as a core filament, or core monofilament, of the cord, which is preferably untwisted.

In another preferred embodiment, most of or all of the parallel cords are said hybrid cords comprising the flat monofilament and the multifilament yarn.

In another preferred embodiment, the flat monofilament has a linear density within a range of 4000 dtex to 5000 dtex, and/or the multifilament yarn has a linear density within a range of 1800 dtex to 2600 dtex.

In still another preferred embodiment, the linear density of the flat monofilament is at least 10%, preferably at least 20%, or even more preferably at least 50% higher than the linear density of the multifilament yarn. In addition, or alternatively, the linear density of the flat monofilament is at most 300%, or preferably at most 250%, or even more preferably at most 150% higher than the linear density of the multifilament yarn.

In still another preferred embodiment, the flat monofilament has one or more of i) a width within a range of 1.0 mm to 1.3 mm; and ii) a thickness within a range of 0.3 mm to 0.6 mm.

The term "flat" describes herein the form of the monofilament in a cross-section perpendicular to an elongated extension of the monofilament. The maximum thickness and the maximum width of the monofilament are also measured herein in such a cross-section. "Flat" means that the cross-section of the monofilament perpendicular to an elongated extension of the monofilament is non-circular. Preferably, the flat monofilament is a monofilament having an aspect ratio of width over thickness (in other words, width divided by thickness) within a range of from 1.2 to 10, more preferably 1.5 to 4.5 or 2 to 4. In case the thickness and/or width is not constant, e.g., along the elongated extension of the monofilament, the largest thickness and/or width is considered. The width is measured perpendicular to the thickness and the width is chosen as being larger than the thickness.

In still another preferred embodiment, the flat monofilament comprises polyamide 6.6 (PA 6.6), such as Nylon^{™} 6.6.

In still another preferred embodiment, the flat monofilament has an essentially elliptical cross section, or in other words cross-sectional form. Elliptical cross sections have turned out to allow a better winding of the multifilament yarn around the flat monofilament and/or avoid damages to the multifilament yarn upon winding. At the same time, a relatively low thickness is provided which allows for use of less rubber composition material in tire plies, particularly in tire carcass plies.

In still another preferred embodiment, the multifilament yarn has one or more of a linear density within a range of 1800 dtex to 2600 dtex; and a diameter within a range of 0.2 mm to 0.6 mm, preferably of 0.2 mm to 0.5 mm.

In still another preferred embodiment, the multifilament yarn comprises from 2 to 3 filaments, preferably 2 filaments, which are twisted together to form the multifilament yarn.

In still another preferred embodiment, the multifilament yarn has a lay length in the cord, which is within a range of 1 mm to 30 mm, preferably 2 mm to 20 mm, or even more preferably 3 mm to 10 mm. Lay length means herein a length, or in other words a distance, of one (e.g., helical) revolution of the multifilament yarn along the monofilament, or equivalent. The multifilament yarn may be described as sheath (multifilament) yarn of the cord and the monofilament may be described as core monofilament of the cord so that the core monofilament and the sheath yarn form the cord.

In still another preferred embodiment, the multifilament yarn comprises 2 aramid filaments twisted together to form the multifilament yarn.

In still another preferred embodiment, each of the aramid filaments is (individually) twisted with 50 turns per meter (TPM) to 350 TPM. In other words, each of the aramid filaments as such is twisted within such a range. In addition, or alternatively, one of the aramid filaments is (individually) twisted in S-direction and another one of the aramid filaments is (individually) twisted in Z-direction, such as within the TPM range mentioned above.

In still another preferred embodiment, both aramid filaments are twisted together within a range of 100 TPM and 400 TPM to form the multifilament yarn. Thus, optionally, each of the aramid filaments may be individually twisted as mentioned in the preceding paragraph, and then again twisted within the range of 100 TPM and 400 TPM to form the multifilament yarn.

In still another preferred embodiment, the hybrid cord has a breaking strength within a range of 350 N to 700 N, preferably 400 N to 600 N, determined according to ASTM D885, or equivalent.

In still another preferred embodiment, the hybrid cord has a maximum thickness within a range of 0.6 mm to 0.9 mm. The thickness of the hybrid cord (including the flat monofilament and the multifilament yarn) is determined perpendicular to the width (mentioned in some embodiments as w) of the flat monofilament.

In still another preferred embodiment, the hybrid cord is a textile hybrid cord.

In still another preferred embodiment, the cord reinforcement is a fabric, preferably a textile fabric.

In still another preferred embodiment, said fabric is a woven fabric. Optionally, the fabric comprises warp cords and weft cords. Preferably, said hybrid cords are the warp cords. Preferably, the weft cords have a linear density which is at least five times lower than the linear density of the hybrid cords, and/or the warp cords, respectively. As typical in the art, linear density means herein a weight per length, such as of a filament, yarn, or cord. For instance, it can be provided in the unit dtex as typical in the art.

According to the second preferred aspect, a tire comprises at least one rubber component reinforced by one or more hybrid cords wherein each of the hybrid cords comprises a flat monofilament and a multifilament yarn, wherein the flat monofilament comprises (or consists of) polyamide and the multifilament yarn is wrapped around the flat monofilament and comprises (or consists of) one or more of aramid, glass fiber material and carbon fiber material. The flat monofilament has a linear density within a range of 2200 dtex to 6000 dtex and the multifilament yarn has a linear density within a range of 1800 dtex to 4400 dtex.

In one preferred embodiment, said rubber component is one of a belt ply, a carcass ply, an overlay ply, and a ply strip. A ply is understood herein as a layer comprising a rubber composition reinforced by cords and/or a fabric. Rubber compositions of such rubber components or plies are known in the art as such.

In another preferred embodiment, the rubber component is a carcass ply, preferably an outermost carcass ply. For instance, if the tire has multiple carcass plies, such as two or three carcass plies, e.g. extending along one another in a sidewall region of the tire, the outermost carcass ply is the carcass ply which is outermost with respect to an equatorial plane of the tire in said sidewall region of the tire.

In still another preferred embodiment, the tire is a pneumatic tire comprising a tread portion, a pair of axially spaced sidewalls, a pair of axially spaced bead portions, one or more, preferably, one or two, (cord reinforced) carcass plies connecting both bead portions and extending along (and e.g., optionally through) each sidewall of the pair of axially spaced sidewalls, and at least one belt arranged radially between the tread portion and the one or more cord reinforced carcass plies in a crown region of the tire, wherein said rubber component is, preferably, a carcass ply of the one or more cord reinforced carcass plies.

In still another preferred embodiment, said carcass ply comprises multiple of the hybrid cords comprising the flat monofilament and the multifilament yarn, and/or the hybrid cords are arranged in parallel to one another.

In still another preferred embodiment, the carcass ply has one or more of a thickness, measured in an equatorial plane of the tire, within a range of 1.4 mm to 1.9 mm, preferably of 1.5 mm to 1.8 mm, and/or has an ends per inch (EPI) range from 10 EPI to 14 EPI. In other words, said carcass ply comprises from 10 cords per inch to 14 cords per inch, determined along a direction perpendicular to the parallel extension of the cords.

In still another preferred embodiment, the tire is one of a radial pneumatic truck tire, and a radial pneumatic passenger car tire. While these are preferred embodiments, other tire applications are possible. For instance, the tire may also be a race tire or an aircraft tire.

In another preferred aspect of the present invention, a tire comprises the cord reinforcement according to the first aspect of the invention or one of its embodiments.

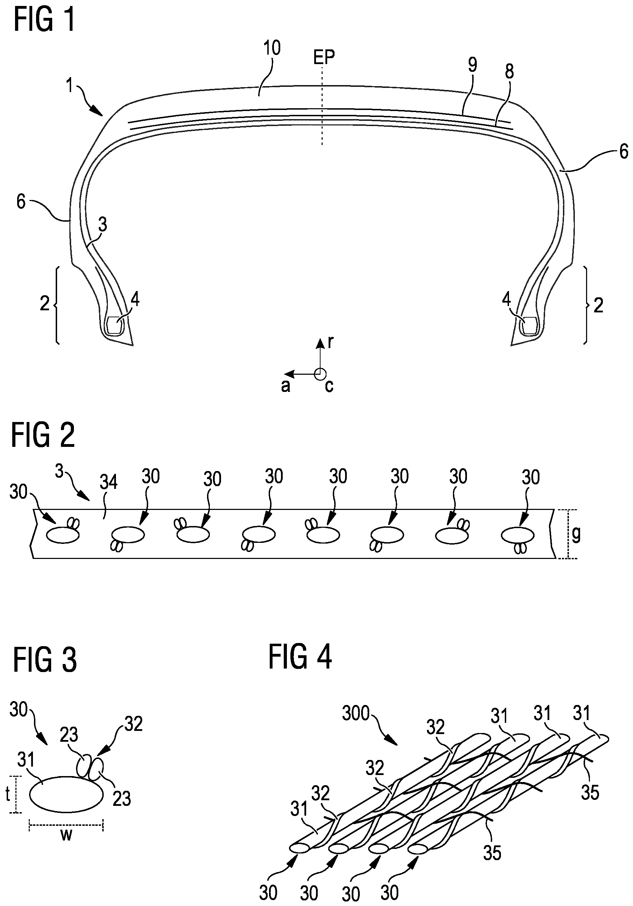

Figure 1 shows a pneumatic radial tire 1 in accordance with an embodiment of the present invention. The tire 1 comprises a pair of axially spaced bead portions 2, a tread portion 10, a carcass ply 3, which is folded around each bead 4 of the respective bead portion 2 and connects both bead portions 2 along a pair of sidewalls 6 of the tire 1. Two belts 8, 9 or in other words, two belt plies, are arranged radially between the carcass ply 3 and the tread portion 10 in a crown region of the tire 1. The carcass ply 3 comprises a cord reinforcement in accordance with an embodiment of the present invention, such as indicated in Figure 2.

For the sake of better understanding the radial direction r, the axial direction a, and the circumferential direction c are indicated in Figure 1. The axial direction a is parallel to the axis of rotation of the tire 1. The radial direction r is perpendicular to the axial direction a. The circumferential direction c is perpendicular to the to the axial direction and the radial direction, and, e.g., parallel to a circumferential centerline of the tire 1 or its equatorial plane EP. References to one of these directions are not necessarily limited to a specific orientation, unless indicated otherwise herein.

While Figure 1 shows only two belts 8, 9 and one carcass ply 3, other embodiments include, e.g., three or four belts, and/or two carcass plies, such as in some light truck, off-the-road, and truck tires.

Figure 2 depicts a schematic partial cross-section of the carcass ply 3 of Figure 1, which comprises a rubber composition 34 (preferably a sulfur-cured rubber composition) reinforced by a plurality of parallel hybrid cords 30. The gauge g, or in other words thickness, of the carcass ply 3, is measured perpendicular to the carcass ply 3, such as in the equatorial plane EP of the above-mentioned tire 1. Preferably, such a gauge g is within a range of 1.4 mm to 1.9 mm for the carcass ply 3 in accordance with the present embodiment of the invention.

Figure 3 schematically shows a hybrid cord 30 in further details. The hybrid cord 30 comprises a flat monofilament 31, here with a preferred elliptical cross-section having the width w and the thickness t, wherein the flat monofilament 31 of the hybrid cord 30 is wrapped with a sheath multifilament yarn 32. In the preferred but non-limiting embodiment, this multifilament yarn 32 comprises two single (mono)filaments 23 which are twisted with one another (or together) to form the multifilament yarn 32. Moreover, each filament 23 is twisted as such. In particular, a first filament 23 of the multifilament yarn 32 is twisted in S-direction and a second filament 23 of the multifilament yarn 32 is twisted in Z-direction, and both filaments 23 of the multifilament yarn 32 are twisted together to form the multifilament yarn 32. Finally, the multifilament yarn 32 is helically twisted or wrapped around the flat (core) monofilament. Thus, in the present embodiment a textile hybrid cord 30 is formed. Optionally, one or more filaments, the yarn and/or the cord are coated and/or dipped, such as with one or more coatings and/or one or more dips, e.g., for improved adhesion to rubber composition material. Such coatings and/or dips are known in the art, such as resorcinol formaldehyde latex (RFL) dips. The same applies to rubber compositions, such as those used in the carcass ply, and/or other rubber components of the tire.

One preferred construction of the multifilament yarn is 1100/2 aramid 300S/300Z/350 TPM. The final twist of the two aramid filaments to form the yarn may either be in S or Z direction. Another preferred construction is 1670/2 dtex aramid 100S/100Z/200 TPM. Again, the final twist may be in S or Z direction. Yet another preferred construction is 1100/2 aramid 100S/100Z/200 TPM, with the final twist in S or Z direction. The monofilament yarn is in one embodiment a 4400/1 dtex Nylon 6.6 flat monofilament. It does not have a twist. The multifilament yarn preferably has a lay length of 3 mm to 10 mm, and/or is wound around the flat monofilament with 100 to 300 TPM. Preferred diameter, thickness, and/or width ranges have already been provided herein above.

Figure 4 shows a schematic partial perspective view of a cord reinforcement for a tire, which is a textile fabric 300 comprising a plurality of parallel hybrid cords 30, wherein each of the cords 30 is formed by a flat monofilament 31 and a multifilament yarn 32 wrapped around the monofilament 31 (as already shown in Figure 3). In the present embodiment, the parallel hybrid cords 30 are warp cords connected by weft cords 35, preferably woven with the hybrid cords 30, or in other words the warp cords. The weft cords may be mono filament cords or multifilament cords. Their linear density is typically lower than the linear density of the warp cords. In a carcass ply of a tire, a hybrid and/or warp cord of such a textile fabric preferably extends in a plane perpendicular to the equatorial plane of the tire.

In particular, cord reinforcements including hybrid cords with said flat monofilament and wrapped by said multifilament yarn have turned out to provide an advanced cut resistance and/or durability, particularly when used as cord reinforcement in at least one carcass ply of the tire. The use of polyamide, such as PA 6.6, as flat core monofilament wrapped by the multifilament yarn within the mentioned linear density ranges further provides a favorable balance between elongation and breaking strength of the cord, e.g., particularly an elongation provided by the polyamide filament and breaking strength provided by the sheath yarn, e.g., made of aramid.

All aspects, embodiments, and features, which are mentioned herein, can be combined with one another.

## Claims

1. A cord reinforcement for a tire, the cord reinforcement comprising parallel cords (30) wherein at least one of the cords (30) is a hybrid cord comprising a flat monofilament (31) and a multifilament yarn (32), the flat monofilament (31) comprising polyamide and the multifilament yarn being wrapped around the flat monofilament (31) and comprising one or more of aramid, glass fiber material and carbon fiber material, and wherein the flat monofilament (31) has a linear density within a range of from 2200 dtex to 6000 dtex and the multifilament yarn (32) has a linear density within a range of from 1800 dtex to 4400 dtex.

2. The cord reinforcement according to claim 1, wherein the multifilament yarn (32) is helically wrapped around the flat monofilament (31).

3. The cord reinforcement according to claim 1 or 2, wherein the flat monofilament (31) has a linear density within a range of from 4000 dtex to 5000 dtex, and the multifilament yarn (32) has a linear density within a range of from 1800 dtex to 2600 dtex.

4. The cord reinforcement according to claim 1, 2 or 3, wherein
(i) the flat monofilament (31) has one or more of:
a linear density which is at least 10% higher than a linear density of the multifilament yarn (32);
a maximum width of 1.0 mm to 1.3 mm; and
a maximum thickness of 0.3 mm to 0.6 mm; and/or wherein
(ii) the multifilament yarn (32) has one or more of:
a linear density within a range of 1800 dtex to 2600 dtex; and
a diameter within a range of from 0.2 mm to 0.6 mm.

5. The cord reinforcement according to at least one of the previous claims, wherein the flat monofilament (31) comprises polyamide 6.6; and/or wherein the flat monofilament (31) has an elliptical or essentially elliptical cross section.

6. The cord reinforcement according to at least one of the previous claims, wherein the multifilament yarn (32) comprises from 2 to 3 filaments twisted together to form the multifilament yarn.

7. The cord reinforcement according to at least one of the previous claims, wherein the multifilament yarn (32) has a lay length in the cord (30), which is within a range of from 3 mm to 10 mm.

8. The cord reinforcement according to at least one of the previous claims, wherein the multifilament yarn (32) has 2 aramid filaments twisted together to form the multifilament yarn.

9. The cord reinforcement according to claim 8, wherein multifilament yarn (32) has one or several or all of the following features:
each of the aramid filaments is individually twisted with 50 TPM to 350 TPM;
one of the aramid filaments is individually twisted in S-direction and another one of the aramid filaments being individually twisted in Z-direction; and
both aramid filaments are twisted together within a range of 100 TPM and 400 TPM to form the multifilament yarn (32).

10. The cord reinforcement according to at least one of the previous claims, wherein the hybrid cord (3) has a breaking strength within a range of from 350 N to 700 N; and/or wherein the hybrid cord (30) has a maximum thickness within a range of 0.6 mm to 0.9 mm.

11. A tire comprising at least one rubber component (34) reinforced by one or more hybrid cords (30), each of the hybrid cords (30) comprising a flat monofilament (31) and a multifilament yarn (32), wherein the flat monofilament (31) comprises polyamide and the multifilament yarn is wrapped around the flat monofilament and comprises one or more of aramid, glass fiber material and carbon fiber material, and wherein the flat monofilament (31) has a linear density within a range of 2200 dtex to 6000 dtex and the multifilament yarn (32) has a linear density within a range of 1800 dtex to 4400 dtex.

12. A tire comprising at least one rubber component (34) and a cord reinforcement in accordance with at least one of the claims 1 to 10.

13. The tire according to claim 11 or 12, wherein said rubber component (34) is one of a belt ply, a carcass ply, an overlay ply, and a ply strip.

14. The tire according to claim 11, 12 or 13 , wherein the tire (1) is a pneumatic tire such as a radial pneumatic truck tire or a radial pneumatic passenger car tire, the tire (1) comprising a tread portion (10), a pair of axially spaced sidewalls (6), a pair of axially spaced bead portions (2), one or more cord reinforced carcass plies (3) connecting both bead portions (2) and extending along each sidewall of the pair of axially spaced sidewalls, and at least one belt (8, 9) arranged radially between the tread portion (10) and the one or more cord reinforced carcass plies (3) in a crown region of the tire (1), and wherein the rubber component (34) is a carcass ply (3) of the one or more cord reinforced carcass plies.

15. The tire according to claim 13 or 14, wherein the carcass ply (3) has one or more of: a thickness, measured in an equatorial plane of the tire (1), within a range of from 1.4 mm to 1.9 mm an EPI (ends per 2.54 cm) range from 10 EPI to 14 EPI.
